# EUROPEAN PATENT APPLICATION

(11) **EP 3 276 908 A1**
(43) Date of publication of application: **31.01.2018**
(21) Application number: 16196269.1
(22) Date of filing: 28.10.2016
(51) Int. Cl.: H04L 29/06, G06F 3/14

(54) **METHOD AND SYSTEM FOR SYNCHRONIZING CONTENT BETWEEN USER DEVICES IN AN ESTABLISHED SESSION**

(30) Priority: 29.07.2016 IN 201641026121
(71) Applicant: Wipro Limited, 560 035 Karnataka (IN)
(72) Inventor: SELVARAJ, Ashok Kumar, 560 100 Karnataka (IN)
(74) Representative: Finnegan Europe LLP

(57) **Abstract**

The present disclosure relates to a method and system for synchronizing content in real-time between two or more user devices in an established session by a content synchronization server. The content synchronization server receives a change request from an initiator user device of two or more user devices for changing a content viewed in established session and transfers the change request to at least one recipient user device of the two or more user devices. The content synchronization server receives a response for the change request from the at least one recipient user device. The content synchronization server retrieve new content associated with the change request from one or more content providing servers using the plurality of session related parameters and transmits the retrieved new content to the two or more user devices synchronously based on the received response for synchronizing the content in real time.

## Description

### FIELD OF THE INVENTION

The present subject matter is related in general to the field of content synchronization, more particularly, but not exclusively to a method and system for synchronizing content in real-time between two or more user devices in an established session.

### BACKGROUND

With the advent of numerous modes of electronic communication and increase in communication technology, sharing of content between users has become comparatively easy. In an instance, users can share all types of the media contents with each other. For instance, media related to entertainment, news, live media etc.

Today, with the rapid development in computerized network, users can share content in a pre-defined group based on similar content interest. The service providers today are increasingly offering contents to the users for subscription. However, synchronizing the content in real-time in a pre-defined group of users is not possible.

In the existing scenario and with the existing technology, a user does not get to know about the current viewing contents watched by the other users. For example, the current viewing contents can be a live broadcasted content or a video-on-demand content. Also, in the existing technique, the users in a pre-defined group cannot synchronize their contents with other users. For instance, if the user in a group wishes to change the content being viewed by the group currently, there is no option through which the content can be changed synchronously.

Thus, though the users wish to synchronize their content with others in real-time, the existing techniques do not provide such synchronization of the contents. Therefore, there is a need for a system which synchronizes contents between user devices in an established session.

### SUMMARY

In an embodiment, the present disclosure relates to a method for synchronizing content in real-time between two or more user devices in an established session. The method comprises receiving a change request from an initiator user device of two or more user devices in an established session for changing a content being viewed in the established session. The change request comprises a plurality of session related parameters. The method comprises transferring the change request to at least one recipient user device of the two or more user devices. The at least one recipient user device is available in a Uniform Resource Indicator (URI) form in the received change request. The method comprises receiving response for the change request from the at least one recipient user device. The response is notified to the initiator user device. The method comprises retrieving new content associated with the change request from one or more content providing servers using the plurality of session related parameters and transmitting the retrieved new content to the two or more user devices in the established session synchronously based on the received response for synchronizing the content in real time.

In an embodiment, the present disclosure relates to a content synchronization server for synchronizing content in real-time between two user devices. The content synchronization server comprises a processor and a memory communicatively coupled to the processor, wherein the memory stores processor executable instructions, which, on execution, causes the content synchronization server to receive a change request from an initiator user device of two or more user devices in an established session for changing a content being viewed in the established session. The change request comprises a plurality of session related parameters. The content synchronization server transfers the change request to at least one recipient user device of the two or more user devices. The at least one recipient user device is available in a Uniform Resource Indicator (URI) form in the received change request. The content synchronization server receives response for the change request from the at least one recipient user device. The response is notified to the initiator user device. The content synchronization server retrieve new content associated with the change request from one or more content providing servers using the plurality of session related parameters and transmit the retrieved new content to the two or more user devices in the established session synchronously based on the received response for synchronizing the content in real time.

In an embodiment, the present disclosure relates to a non-transitory computer readable medium including instructions stored thereon that when processed by at least one processor cause a content synchronization server to receive a change request from an initiator user device of two or more user devices in an established session for changing a content being viewed in the established session, wherein the change request comprises a plurality of session related parameters, transfer the change request to at least one recipient user device of the two or more user devices, wherein the at least one recipient user device is available in a Uniform Resource Indicator (URI) form in the received change request, receive response for the change request from the at least one recipient user device, wherein the response is notified to the initiator user device, retrieve new content associated with the change request from one or more content providing servers using the plurality of session related parameters and transmit the retrieved new content to the two or more user devices in the established session synchronously based on the received response for synchronizing the content in real time.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Fig.1a** illustrates architecture for establishing a session for content viewing in accordance with some embodiments of the present disclosure;
**Fig.1b** illustrates an exemplary environment for synchronizing content in real-time between two user devices in an established session in accordance with some embodiments of the present disclosure;
**Fig.2a** shows a sequence diagram illustrating selection of interested content by the user in accordance with some embodiments of the present disclosure;
**Fig.2b** shows a sequence diagram illustrating creation of a session in accordance with some embodiments of the present disclosure;
**Fig.2c** shows a sequence diagram illustrating content synchronization between two user devices in accordance with some embodiment of the present disclosure;
**Fig.2d** shows a sequence diagram illustrating the content synchronization between more than two user devices in accordance with some embodiment of the present disclosure;
**Fig.3** shows an exemplary representation of synchronizing content in real-time between two user devices in accordance with some embodiment of the present disclosure;
**Fig.4** illustrates a flowchart showing a method for synchronizing content in real-time between two or more user devices in an established session in accordance with some embodiments of present disclosure; and
**Fig.5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present disclosure relates to method for synchronizing content in real-time between two or more user devices in an established session. The present disclosure provides a content synchronization server which synchronises content between two or more user devices present in an established session. In an embodiment, the two or more user devices are connected through an established content viewing session. The two or more user devices may share content with each other in the established session. At any time in the content viewing session, the content synchronization server receives a change request from an initiator user device for changing the content viewed currently by the two or more user devices. The content synchronization server receives the consent of the at least one recipient user device for changing the content being viewed. Once the consent is received, the content synchronization server retrieves the requested content from the content providing servers. The retrieved consent is transmitted to the two or more user devices synchronously.

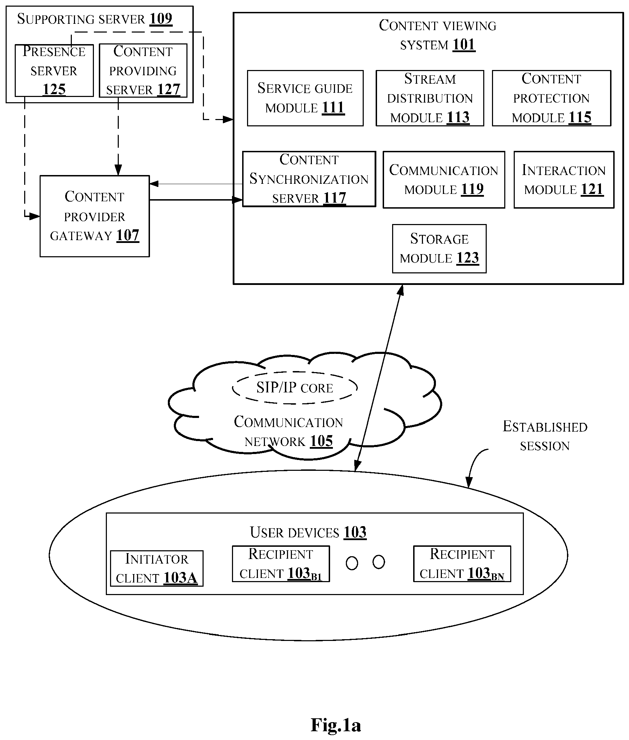

**Fig.1a** illustrates architecture for establishing a session for content viewing in accordance with some embodiments of the present disclosure.

As shown in Fig.1a, the architecture depicts a content viewing system 101, user devices 103 connected through a communication network 105. The content viewing system 101 is connected to a content provider gateway 107. The content viewing system 101 comprises a plurality of functional components and is supported by external components. The user devices 103 comprise an initiator user device 103_{A} and one or more recipient user devices 103_{B}. Further, the functional components of the content viewing system 101 are supported by the external components. The external components may include, but not limited to, SIP/IP core network 105, a supporting server 109 which comprises a presence server 125 and a content providing server 127. In an embodiment, the user may view the information of content being viewed by their contacts. The information of the content being viewed is provided by the respective users to the content viewing system 101. The content viewing system 101 receives a content interest request from a user to deliver an interested content. On receiving the content interest from the user, the content viewing system 101 sends the request to the content provider gateway 107. The content provider gateway 107 interacts with the content providing server 127 and fetches the interested content of the user. In an embodiment, the content viewing system 101 resides in network domain and interacts with the user devices 103 along with the supporting server 109. Further, the content viewing system 101 comprises CSYNC-1 interface, CSYNC-2 interface and CSYNC-3 interface. The CSYNC-1 interface supports establishing content viewing session for the user devices 103, sharing of the user content interest and delivery of one of live media, content viewing information, notifications, group announcements, non-live media etc. The CSYNC-1 interface allows the content providing server 127 to trigger session with the user devices 103 through the content viewing system 101 and the content provider gateway 107. The CSYNC-2 forwards session initiation and termination request to/from the content providing server 127. The CSYNC-3 interface supports establishing a content viewing session for retrieving the content and relevant information of the content providing server 127. Also, the CSYNC-3 interface forwards real-time media requests to the content providing server 127. The CSYNC-3 provides the media content and related information from the content providing server 127 to the content viewing system 101 through the established session. Further, the functional components of the content viewing system 101 comprises a server guide module 111, a stream distribution module 113, a content protection module 115, a communication module 119, an interaction module 121 and a storage module 123.

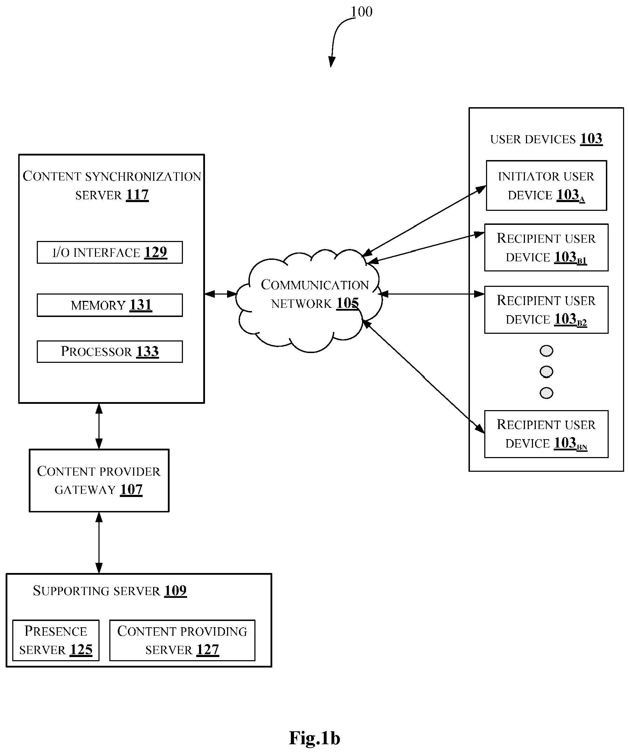

The service guide module 111 refers to the Open Mobile Alliance (OMA) Mobile Broadcast (BCAST) Services and provides the user with various broadcasted content available in their location. Further, the service guide module 111 also provides support for rich media solution based service guide presentation. The stream distribution module 113 refers directly to the Open Mobile Alliance (OMA) Mobile Broadcast (BCAST) services to distribute stream of content over the broadcast channel. Further, the stream distribution module 113 also distributes a file or a bundle of files over the broadcast channel. In an embodiment, the functionalities provided by service guide module 111 and stream distribution module 113 are specified in OMA-AD-BCAST specification published in Open Mobile Alliance forum. The content protection module 115 provides supports for protection of file, stream and interfaces among BCAST logical entities. The communication module 119 refers to a Converged IP Messaging (CPM) Enabler server side to support interactions between users and the content providing server 127. In an embodiment, the functionalities of the CPM enabler are specified in [OMA-CPM-AD] specification. The communication module 119 further performs communication session handling which comprises session initiation, modification and termination. The communication module 119 also provides Session Description Protocol (SDP) for the communication. The interaction module 121 provides a point-to-point communication between a BCAST service application and the terminal. The storage module 123 stores and maintains communication related content and different types of content. The different types of content include, but are not limited to, viewed/ viewing content, user generated content such as live and non-live and associated content. In an embodiment, the storage module 123 further stores content synchronization information of the local storage according to the user's preferences. Further, the storage module 123 maintains the content viewing information of the user. In an embodiment, the content viewing system 101 establishes a session between the initiator user device 125_{A} and at least one recipient user device 127 for content viewing. Further, the content viewing system 101 comprises a content synchronization server 117, explained in Fig.1b. The content synchronization server 117 synchronizes the content between the initiator user device 103_{A} and the at least one recipient user device 103_{B}, whenever a request for changing content is initiated.

**Fig.1b** illustrates an exemplary environment for synchronizing content in real-time between two user devices in an established session in accordance with some embodiments of present disclosure.

As shown in Fig.1b, the environment comprises a content synchronization server 117 and user devices 103 connected through a wired or wireless computer core network 105. The content synchronization server 117 is also connected to a content provider gateway 107. The content provider gateway 107 is further connected to the supporting server 109. The user devices 103 may comprise an initiator user device 103_{A} which initiates a session for content viewing. The user devices 103 may comprise a recipient user device 103_{B1}, a recipient user device 103_{B2,..................,} recipient user device 103_{BN}. In an embodiment, the recipient user device 103B may be one or more than one recipient user device (collectively referred as at least one recipient user device 103_{B}). In an embodiment, the user devices 103 may include, but are not limited to, a desktop computer, mobile phone, laptops, tablets, Personal Digital Assistants (PDAs) and any other computing device. In an embodiment, the initiator user device 103_{A} and at least one recipient user device 103_{B} are present in the established session generated by the content viewing system 101. The content synchronization server 117 handles the content synchronization between the user devices 103 in real-time. The content synchronization server 117 receives a change request from the initiator user device 103A for changing the content being viewed in an established session. In an embodiment, the session is established between two or more user devices 103. The change request comprises a plurality of session related parameters. In an embodiment, the plurality of session related parameters comprises Uniform Resource Identifier (URI) address of the at least one recipient user device of the user devices 103, a session identifier, a header field along with ContentSync feature tag, a Multi-purpose Internet Mail Extension (MIME) Session Description Protocol (SDP) field. In an embodiment, the session identifier is a ContentSyncConvergenceID field in the header field of the session related parameters, wherein the said ContentSyncConvergenceID is a unique identifier for the change request and response for the established session for synchronized content viewing. In an embodiment, the content synchronization server 117 provides Session Description Protocol (SDP) negotiations for real-time content synchronization. Further, the content synchronization server 117 distributes the content media streams to the users according to their preferences. In an embodiment, the established session comprises a session among the two or more user devices 103 for real-time content synchronization, where the established session is identified by the session identifier, MIME SDP field of the session related parameters.

The content synchronization server 117 comprises an I/O Interface 129, a memory 131 and a processor 133. The I/O interface 129 is configured to retrieve the change request from the initiator user device 103_{A}. The I/O interface 129 also receives the response for the change request from the at least one recipient user device 103_{B}.

The received information from the I/O interface 129 is stored in the memory 131. The memory 131 is communicatively coupled to the processor 133 of the content synchronization server 117. The memory 131 also stores processor instructions which cause the processor 133 to execute the instruction in order to synchronize content in real-time between two or more user devices in an established session.

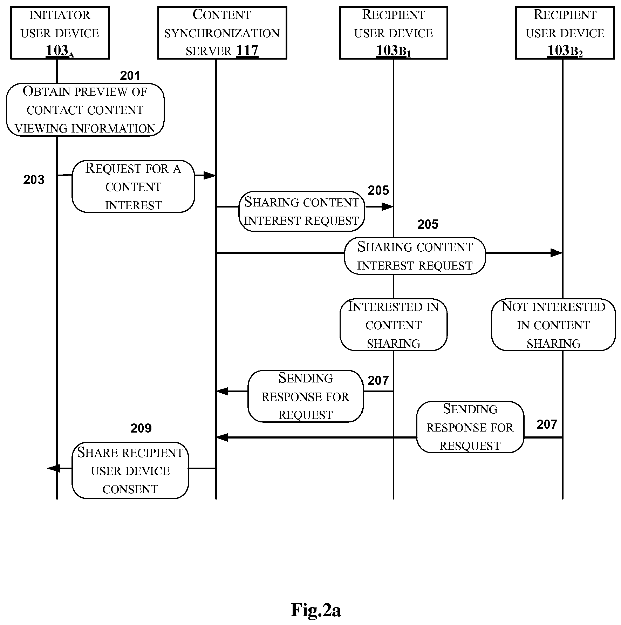

**Fig.2a** shows a sequence diagram illustrating selection of interested content by the user in accordance with some embodiments of the present disclosure.

Fig.2a shows a sequence diagram illustrating the selection of the content interest by the users. In an embodiment, the user devices 103 comprise contacts information along with the content viewing information of the contacts. The content information of the contacts is available once the associated users uploads/provides access to the information. The user devices 103 may select the content of a contact from the available contacts. In an embodiment, the user associated with the initiator user device 103_{A} may subscribe for their contacts content viewing information in the presence server 125. Once, the contacts publish their content viewing information to the presence server 125, the initiator user device 103_{A} is notified about the contact content viewing information through the CSYNC-1 interface. In an embodiment, the content viewing information may be an image, audio, video or Uniform Resource Locator (URL).

At 201, upon subscribing for the contact content viewing information, the initiator user device 103_{A} obtains the preview of the image/video/URL of the contact content.

At 203, the initiator user device 103_{A} generates a request (Session Initiation Protocol) for content interest to the content synchronization server 117. In an exemplary embodiment, the content interest is requested with a SIP MESSAGE according to the rules and procedures of [RFC-3428-Session Initiation Protocol (SIP) Extension]. The SIP MESSAGE comprises a request-Uniform Resource Identifier (URI) as the content viewing system address, if the content interest is expressed to one or more than one users. Further, the SIP MESSAGE comprises a synchronization feature tag (CS_FT) with a value for expressing the content interest and delivering the content in the established session. The synchronization feature tag indicates the content synchronization server 117 whether the initiated session is for establishing a session to watch the interested content with the selected users. Further, the SIP MESSAGE comprises a uniform resource identifier of the recipient user 103_{B1} and recipient user device 103_{B2}. The SIP MESSAGE comprises a ContentSyncConvergenceID, which is a unique identifier. Further, the SIP MESSAGE under the Content-Type "application/vnd.content-interest+xml comprise a ContentRef which indicates a reference to the content to be delivered for the content interest, a ContentName indicating the name of the content, the "Description" field indicating the description of the content and the "UserMessage" field indicating the message to the recipient user devices regarding the expressed content interest. In an embodiment, the content synchronization server 117 checks the value of the ContentSyncConvergenceID shared in the SIP MESSAGE with locally stored ContentSyncConvergenceID values. In case, the values do not match with any of the locally stored ContentSyncConvergenceID, then the content synchronization server 117 stores the value of the ContentSyncConvergenceID locally. Further, the content synchronization server 117 obtains the at least one recipient user device 103_{B} from the URI received in the SIP MESSAGE through the CSYNC-1 interface.

At 205, the content synchronization server 117 shares the SIP MESSAGE request with the recipient user device 103_{B1} and recipient user device 103_{B2} as specified in the URI of the received SIP MESSAGE.

At 207, the recipient user device 103_{B1} and recipient user device 103_{B2} send a SIP MESSAGE response for the SIP MESSAGE request. The SIP MESSAGE response from the recipient user device 103_{B1} and recipient user device 103_{B2} indicates to the content synchronization server 117 if the recipient user device 103_{B1} and recipient user device 103_{B2} have given their consent for the requested session for the content interest. The SIP MESSAGE response comprises a contentsynconvergenceID as received in the SIP MESSAGE request. In an embodiment, the content synchronization feature tag 'CS_FT" with value 'urn%3Aurn-7%3A3gpp-service.ims.iari.contentinterest' and a UserInterest field indicates the consent of the recipient user device 103_{B1} and recipient user device 103_{B2}. The UserInterest field is set to values either 'yes' (interested) or 'No' (not interested). The SIP MESSAGE response is sent to the content synchronization server 117 through a CSYNC-1 interface.

At 209, the content synchronization server 117 upon receiving the SIP MESSAGE response from the recipient user device 103_{B1} and recipient user device 103_{B2}, shares the SIP MESSAGE response with the initiator user device 103_{A} through the CSYNC-1 interface. In an embodiment, the content synchronization server 117 includes the response of recipient user device 103_{B1} and response of recipient user device 103_{B2} in the UserID element and the sub-element in Multipurpose Internet Mail Extension body.

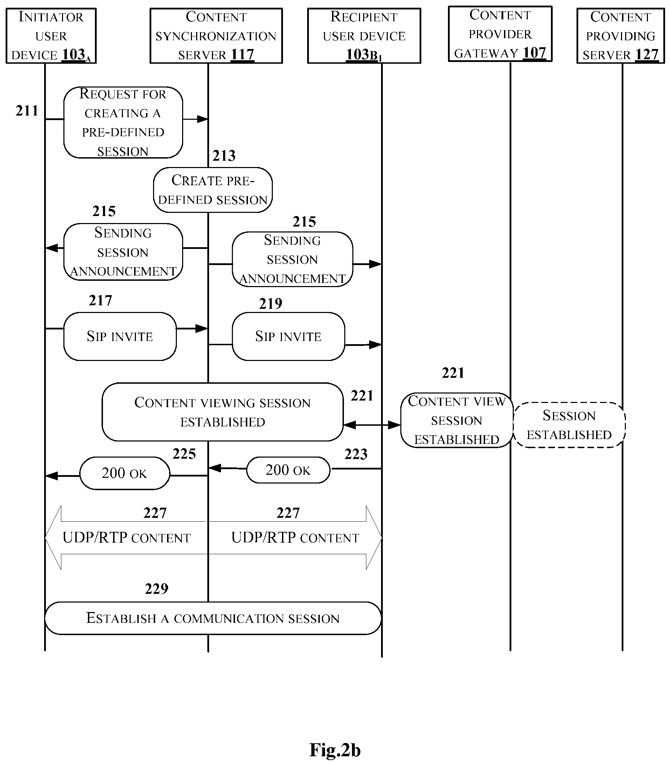

**Fig.2b** shows a sequence diagram illustrating creation of a session in accordance with some embodiment of the present disclosure.

Fig.2b illustrates creation of a session for viewing content by the initiator user device 103_{A} and the interested recipient user device 103_{B1}. Fig.2b explains the sequence of steps between the initiator user device 103_{A}, the content synchronization server 117 and the interested recipient user device 103_{B1}.

At 211, upon receiving the recipient user device 103_{B1} consent from the content viewing system 101, the initiator user device 103_{A} generates and transmits a request to the content viewing system 101 for creating session. The session is requested for viewing the content with the interested recipient user device 103_{B1}. The request for the session establishment comprises the request-URI form comprising the content viewing system address, an URI form which comprises the recipient user device 103_{B1} information in the requested session and policies associated with the session.

At 213, the content viewing system 101 obtains the recipient user device 103_{B1} from the URI form and creates the session.

At 215, the content viewing system 101 sends a session announcement to all the user devices 103 through the CSYNC-1 interface informing the creation of the session. In an embodiment, the session announcement of the created session is performed through the SIP message.

Further, for establishing the session among all the user devices 103, the initiator user device at 103_{A} sends a SIP INVITE to the content viewing system 101 at 217. The SIP INVITE comprises a request -URI to the address of the recipient user device 103_{B1} and a header field. The header field comprises an Accept-Contact header field with a ContentSync IARI feature tag for instance 'urn: urn-7:3gpp-service.ims.1-1-cv-cm' and a ContentSync ICSI feature tag for instance 'urn: urn-7:3gpp-service.ims.cv-cm'. Further, the header field comprises Accept-Contact header, P-Preferred-Service header and Contact header, where the Accept-Contact header, P-Preferred-Service header and Contact header comprise an IMS Communication Service Identifier (ICSI) and an IMS Application Reference Identifier (IARI) ContentSync feature tag. The IMS Communication Service Identifier (ICSI) and an IMS Application Reference Identifier (IARI) indicate if the initiated session is for synchronized content viewing and if the initiated session is a synchronization session between two user devices 103 or more than two user devices 103 respectively. In an embodiment, the P-Preferred-Service header comprises the value of the ContentSync ICSI feature tag 'urn: urn-7:3gpp-service: ims.icsi.cv-cm'. Further, the header comprises ContentSyncConvergenceID header field of the existing content viewing session. By including the ContentSyncConvergenceID field, the initiator user device 103_{A} or at least one recipient user device 103_{B} identifies the requests and responses belonging to same content viewing and communication session for synchronized content viewing and communication. Further, the SIP INVITE comprises a MIME SDP body. The MIME SDP field of the SIP INVITE comprises a ContentRef which provides reference to the new content identified for content synchronization and a synchronization field Sync indicating the initiator user device 103_{A} and at least one recipient user device 103_{B} are synchronized for content viewing. In an embodiment, the value of synchronization field Sync may be set to 'yes' if both initiator user device 103_{A} and recipient user device 103_{B1} in the established session are synchronized for content viewing.

At 219, the content viewing system 101 relays the SIP INVITE request to the recipient user device 103_{B1}.

At 221, the content viewing system 101 establishes a UDP/RTP session with the content providing server 127 through the content provider gateway 107. In an embodiment, the content providing servers 127 for different user devices 103 may be different. There may be cases, where the initiator user device 103_{A} and the recipient user device 103_{B1} are registered with different content providing servers 127 and the initiator user device 103_{A} may request the content (which is recipient user device content) which is not available with the content providing server 127 of the initiator user device 103_{A} and the initiator user device 103_{A} is not subscribed for the requested content. In such case, the content viewing system 101 fetches the requested content from the content providing server 127 of the recipient user device 103_{B} and the initiator user device 103_{A} is required to pay for the requested content. Additionally, if the initiator user device 103_{A} requests for a content which is subscribed by the initiator user device 103_{A} and available with the content providing server 127, the content synchronization server 117 fetches it from the content providing server 127.

At 223, the recipient user device 103_{B1} sends a response 200 OK to the content viewing system 101 for the pre-defined session and content viewing.

At 225, the content viewing system 101 further relays the SIP 200 OK response to the initiator user device 103_{A} accepting for setting up the content viewing session.

At 227, the content viewing system 101 sets up a UDP/RTP channel towards both the initiator user device 103_{A} and the recipient user device 103_{B1}.

At 229, the content viewing system 101 establishes the requested session. Once the session is established, the users view the content through the established session.

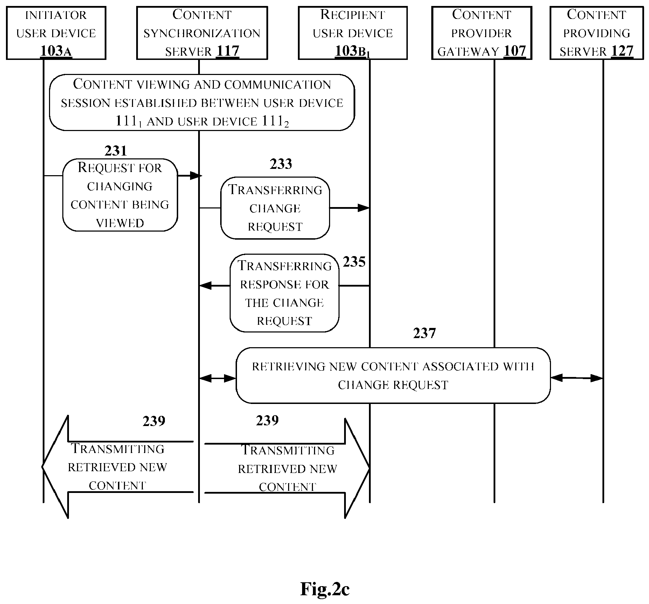

**Fig.2c** shows a sequence diagram illustrating the content synchronization between two user devices in accordance with some embodiment of the present disclosure.

The fig.2c shows the steps for synchronizing the content in the established session between two user devices through the CSYNC-1 interface whenever any of the user devices request for content change.

At 231, the initiator user device 103_{A} requests the content synchronization server 117 to change the content being viewed in the established session. In an embodiment, the request for the content change may be made by either the initiator user device 103_{A} or the at least one recipient user device 103_{B}. The initiator user device 103_{A} generates a SIP re-INVITE request and sends it to the content synchronization server 117. The SIP re-INVITE comprises a request -URI to the address of the recipient user device and a header field. The header field comprises an Accept-Contact header field with a ContentSync IARI feature tag for instance 'urn: urn-7:3gpp-service.ims.iari.1-1-cv-cm' and a ContentSync ICSI feature tag for instance 'urn: urn-7:3gpp-service.ims.icsi.cv-cm'. Further, the header field comprises Accept-Contact header, P-Preferred-Service header and Contact header, where the Accept-Contact header, P-Preferred-Service header and Contact header comprise an IMS Communication Service Identifier (ICSI) and an IMS Application Reference Identifier (IARI) ContentSync feature tag. The IMS Communication Service Identifier (ICSI) and an IMS Application Reference Identifier (IARI) indicate if the initiated session is for synchronized content viewing and if the initiated session is a synchronization session between two user devices or more than two user devices 103 respectively. In an embodiment, the P-Preferred-Service header comprises the value of the ContentSync ICSI feature tag 'urn: urn-7:3gpp-service: ims.icsi.cv-cm'. Further, the header comprises a ContentSyncConvergenceID header field of the existing content viewing session. By including the ContentSyncConvergenceID field, the initiator user device 103_{A} or at least one recipient user device 103_{B} identify the requests and responses belonging to same content viewing session for synchronized content viewing and communication. Further, the SIP INVITE comprises a MIME SDP body. The MIME SDP field of the SIP re-INVITE comprises a ContentRef which provides reference to the new content identified for content synchronization and a synchronization field Sync indicating the initiator user device 103_{A} and the recipient user device 103_{B1} are synchronized for content viewing. In an embodiment, the value of synchronization field Sync may be set to 'yes', if both the initiator user device 103_{A} and recipient user device 103_{B1} in the established session are synchronized for content viewing. In addition, the value of the synchronization field Sync may be set to 'no', if both the initiator user device 103_{A} and the recipient user device 103_{B1} in the established session do not wish to synchronize their content.

At step 233, the content synchronization server 117 relays change request along with the SIP re-INVITE request to the recipient user device 103_{B1} for changing the content being viewed in the established session.

At 235, upon receiving the SIP re-INVITE request for changing the content being viewed with ContentSync IARI feature tag 'urn:urn-7:3gpp-service.ims.iari.1-1-cv-cm' in the Accept-Contact header field, the recipient user device 103_{B1} modifies Media Plane according to the re-negotiated SDP of the new content. The recipient user device 103_{B1} transmits a response to the content synchronization server 117 with a value 'yes' in the synchronization field Sync. In fig.2c, the recipient user device 103_{B1} sends a response for accepting the requested content change.

At 237, once the recipient user device 103_{B1} accepts the change request, the content synchronization server 117 retrieves the new content associated with the SIP re INVITE from the associated content providing server 127.

At 239, the content synchronization server 117 transmits the requested new content synchronously to the initiator user device 103_{A} and the recipient user device 103_{B1}, only if the value present in the synchronization field Sync is 'yes' in the MIME SDP body of the SIP re-INVITE response at 235. The initiator user device 103_{A} and the recipient user device 103_{B1} may then view the new content synchronously.

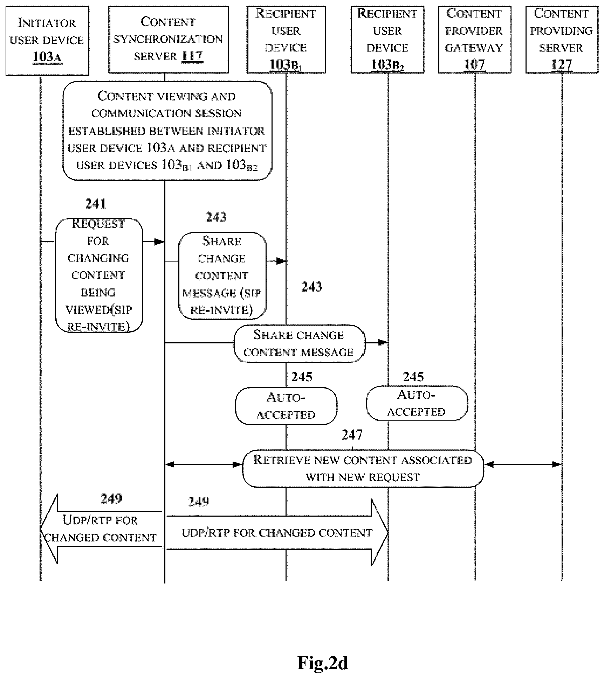

**Fig.2d** shows a sequence diagram illustrating the content synchronization between more than two user devices in accordance with some embodiment of the present disclosure.

At block 241, the initiator user device 103_{A} requests the content synchronization server 117 to change the content being viewed in the established session. The initiator user device 103_{A} generates a SIP re-INVITE request and sends it to the content synchronization server 117. The SIP re-INVITE comprises a request -URI to the address of the recipient user device 103_{B} 1 and recipient user device 103B2 and a header field. The header field comprises an Accept-Contact header field with a ContentSync ICSI feature tag for instance 'urn: urn-7:3gpp-service.ims.icsi.cv-cm' and a ContentSync IARI feature tag for instance 'urn: urn-7:3gpp-service.ims.iari.group-cv-cm'. Further, the header field comprises an Accept-Contact header, P-Preferred-Service header and Contact header. The Accept-Contact header, P-Preferred-Service header and Contact header comprise an IMS Communication Service Identifier (ICSI) and an IMS Application Reference Identifier (IARI) ContentSync feature tag. The IMS Communication Service Identifier (ICSI) and an IMS Application Reference Identifier (IARI) indicates if the initiated session is for synchronized content viewing and if the initiated session is a synchronization session between two user devices or more than two user devices 103 respectively. In an embodiment, the P-Preferred-Service header comprises the value of the ContentSync feature tag 'urn: urn-7:3gpp-service: ims.icsi.cv-cm'. Further, the header comprises a ContentSyncConvergenceID field of the existing content viewing session. By including the ContentSyncConvergenceID field, the initiator user device 103_{A}/ the recipient user devices identify the requests and responses belonging to the same content viewing for synchronized content viewing and communication. Further, the SIP INVITE comprises a MIME SDP body. The MIME SDP field of the SIP re-INVITE comprises a ContentRef which provides reference to the new content identified for content synchronization and a synchronization field Sync indicating the initiator user device 103_{A} and the recipient user device 103_{B1} and recipient user device 103_{B2} are synchronized for content viewing. In an embodiment, the value of synchronization field Sync may be set to 'yes' as the initiator user device 103_{A} and the recipient user device 103_{B1} and recipient user device 103_{B2} in the established session are synchronized for content viewing.

At step 243, the content synchronization server 117 notifies the recipient user device 103_{B1} and recipient user device 103_{B2} about the changes initiated by the initiator user device 103_{A}.

At step 245, the request for changing the content is auto accepted by the recipient user device 103_{B1} and recipient user device 103_{B2}.

At step 247, the content synchronization server 117 retrieves the new content associated with the SIP re INVITE from the associated content providing server 127.

At step 249, the content synchronization sever 117 sends the new requested content through UDP/RTP to the initiator user device 103_{A}, the recipient user device 103_{B1} and recipient user device 103_{B2} synchronously.

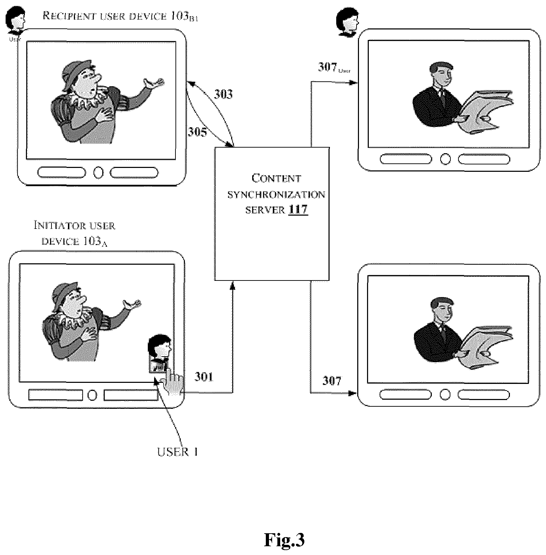

**Fig.3** shows an exemplary representation of synchronizing content in real-time between two user devices in accordance with some embodiment of the present disclosure.

As shown in Fig.3, the environment 300 illustrates the sequence of steps for synchronizing content according to an exemplary embodiment of the present disclosure. The environment 300 comprises a content synchronization server 117 connected to an initiator user device 103_{A} and a recipient user device 103_{B1} through a communication network (not shown in fig). The initiator user device 103_{A} and the recipient user device 103_{B1} are in a pre-defined session and are playing the same content.

As shown in fig.3, at 301, the initiator user device 103_{A} and the recipient user device 103_{B1} are viewing the content. The content viewed by the initiator user device 103_{A} and the recipient user device 103_{B1} is a cartoon video. The initiator user device 103_{A} sends a content change request to the content synchronization server 117 for changing the currently viewed content, i.e., cartoon video to a particular movie. The content synchronization server 117 at 303 transmits the change request received from the initiator user device 103_{A} to the recipient user device 103_{B1}. On receiving the change request from the content synchronization server 117, the recipient user device 103_{B1} at 305 sends a response for the change request. In an embodiment, the recipient user device 103_{B1} may accept or reject the change requested. At 305, the recipient user device 103_{B1} accepts the change request for changing the currently viewed cartoon video to the particular movie. The content synchronization server 117 on receiving the acceptance from the recipient user device 103_{B1} retrieves the requested movie video from the associated content providing server 127. In an embodiment, the associated content providing server 127 may be same or different. In an embodiment, the response of the recipient user device 103_{B1} is notified to the initiator user device 103_{A} before the transmission is performed. Upon receiving the requested content from the content providing server 127, the content synchronization server 117 at 307 transmits the requested movie video to the initiator user device 103_{A} and the recipient user device 103_{B1} synchronously as shown in fig.3.

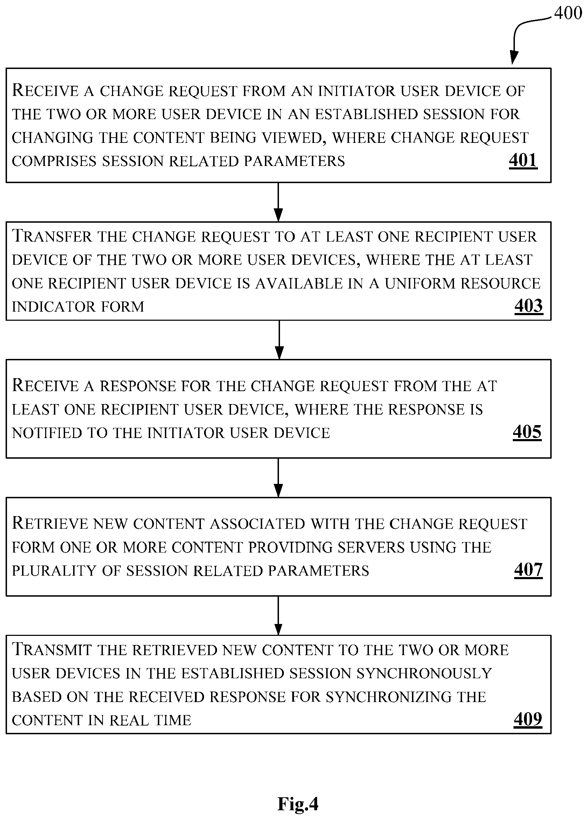

**Fig.4** illustrates a flowchart showing a method for synchronizing content in real-time between two or more user devices in an established session in accordance with some embodiments of present disclosure.

As illustrated in Fig.4, the method 400 comprises one or more blocks for synchronizing content in real-time between two or more user devices in an established session. The method 400 may be described in the general context of computer executable instructions. Generally, computer executable instructions can include routines, programs, objects, components, data structures, procedures, modules, and functions, which perform particular functions or implement particular abstract data types.

The order in which the method 400 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 401, the content synchronization server 117 receives a change request from an initiator user device of two or more user devices in an established session for changing a content being viewed in the established session, where the change request comprises a plurality of session related parameters. In an embodiment, the plurality of session related parameters comprises Uniform Resource Identifier (URI) address of the at least one recipient user device of the two or more user devices, a session identifier, a header field along with ContentSync feature tag, a Multi-purpose Internet Mail Extension (MIME) Session Description Protocol (SDP) field.

At block 403, the content synchronization server 117 transfers the change request to at least one recipient user device of the two or more user devices. The at least one recipient user device is available in a Uniform Resource Indicator (URI) form in the received change request.

At block 405, the content synchronization server 117 receives a response for the change request from the at least one recipient user device 103_{B}, where the response is notified to the initiator user device 103_{A}. The response for the change request is one of acceptance and rejection of the change request by a recipient user device, if the established session is between two user devices 103. In an embodiment, the response for the change request is auto-accepted by each of the recipient user device, if the established session is between more than two user devices 103.

At block 407, the content synchronization server 117 retrieves new content associated with the change request from one or more content providing server 127 using the plurality of session related parameters. In an embodiment, the new content is transmitted to the two user devices 103 in the established session upon acceptance of the change request by the recipient user device. In another embodiment, the response for the change request is auto-accepted by each recipient user device if the established session is between more than two user devices 103.

At block 409, the content synchronization server 117 transmits the retrieved new content to the two or more user devices 103 in the established session synchronously based on the received response for synchronizing the content in real time. The new content is transmitted to the two user devices in the established session upon acceptance of the change request by the recipient user device. In an embodiment, the established session comprises a session among the two or more user devices 103 for real-time content synchronization, wherein the established session is identified by the session identifier, MIME SDP field of the session related parameters.

### Computing System

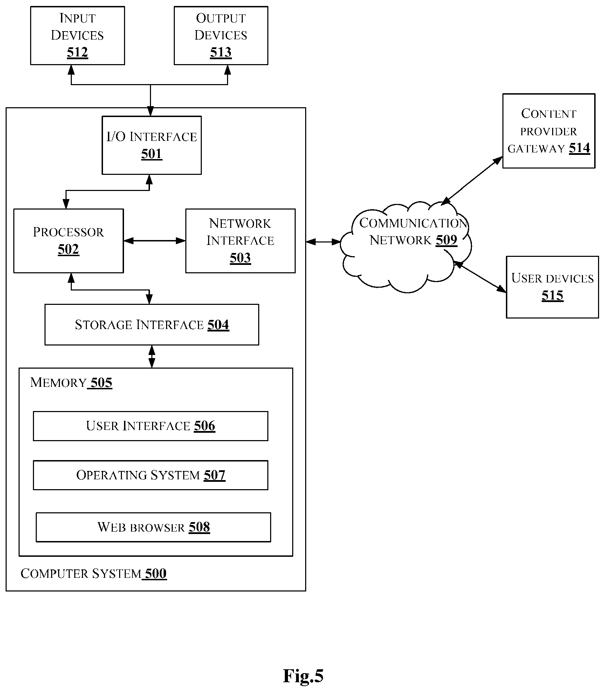

**Figure 5** illustrates a block diagram of an exemplary computer system 500 for implementing embodiments consistent with the present disclosure. In an embodiment, the computer system 500 is used to implement the content synchronization server. The computer system 500 may comprise a central processing unit ("CPU" or "processor") 502. The processor 502 may comprise at least one data processor for synchronizing content in real-time between two or more user devices in an established session. The processor 502 may include specialized processing units such as integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 500 consists of a content synchronization server. The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 509 may include, without limitation, a direct interconnection, local area network (LAN), wide area network (WAN), wireless network (e.g., using Wireless Application Protocol), the Internet, etc. Using the network interface 503 and the communication network 509, the computer system 500 may communicate with content provider gateway 514 and user devices 515. The network interface 503 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 509 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 502 may be disposed in communication with a memory 505 (e.g., RAM, ROM, etc. not shown in figure 5) via a storage interface 504. The storage interface 504 may connect to memory 505 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database components, including, without limitation, user interface 506, an operating system 507, web browser 508 etc. In some embodiments, computer system 500 may store user/application data 506, such as the data, variables, records, etc., as described in this disclosure. Such databases may be implemented as fault-tolerant, relational, scalable, secure databases such as Oracle or Sybase.

The operating system 507 may facilitate resource management and operation of the computer system 500. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like.

In some embodiments, the computer system 500 may implement a web browser 508 stored program component. The web browser 508 may be a hypertext viewing application, such as Microsoft Internet Explorer, Google Chrome, Mozilla Firefox, Apple Safari, etc. Secure web browsing may be provided using Secure Hypertext Transport Protocol (HTTPS), Secure Sockets Layer (SSL), Transport Layer Security (TLS), etc. Web browsers 508 may utilize facilities such as AJAX, DHTML, Adobe Flash, JavaScript, Java, Application Programming Interfaces (APIs), etc. In some embodiments, the computer system 500 may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system 500 may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

An embodiment of the present disclosure synchronises the content in real-time between user devices.

An embodiment of the present disclosure authorizes the users to change the content during the established content viewing session such that the content is synchronized with all the users of the session.

An embodiment of the present disclosure enhances the content viewing experience of the users in the established session by having effective communication in the context of viewing content.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 4 show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for synchronizing content in real-time between two or more user devices in an established session, the method comprising:
receiving, by a content synchronization server, a change request from an initiator user device of two or more user devices in an established session for changing a content being viewed in the established session, wherein the change request comprises a plurality of session related parameters;
transferring, by the content synchronization server, the change request to at least one recipient user device of the two or more user devices, wherein the at least one recipient user device is available in a Uniform Resource Indicator (URI) form in the received change request;
receiving, by the content synchronization server, a response for the change request from the at least one recipient user device, wherein the response is notified to the initiator user device;
retrieving, by the content synchronization server, new content associated with the change request from one or more content providing servers using the plurality of session related parameters; and
transmitting, by the content synchronization server, the retrieved new content to the two or more user devices in the established session synchronously based on the received response for synchronizing the content in real time.

2. The method as claimed in claim 1, wherein the plurality of session related parameters comprises one or more of: a Uniform Resource Identifier (URI) address of the at least one recipient user device of the two or more user devices; a session identifier; a header field along with a ContentSync feature tag; and a Multi-purpose Internet Mail Extension (MIME) Session Description Protocol (SDP) field.

3. The method as claimed in claim 2, wherein the session identifier is a ContentSyncConvergenceID field in the header field of the session related parameters, wherein the said ContentSyncConvergenceID is a unique identifier for the change request and response for the established session for synchronized content viewing.

4. The method as claimed in claim 2 or claim 3, wherein the MIME SDP field of the session related parameters comprises a ContentRef which provides reference to the new content identified for content synchronization and a synchronization field Sync indicating the initiator user device and at least one recipient user device of the two or more user devices in the established session are synchronized for content viewing.

5. The method as claimed in any of claims 2 to 4, wherein the header field comprises Accept-Contact header, P-Preferred-Service header and Contact header, wherein the Accept-Contact header, P-Preferred-Service header and Contact header comprise an IMS Communication Service Identifier (ICSI) and an IMS Application Reference Identifier (IARI) ContentSync feature tag indicating if the initiated session is for synchronized content viewing and if the initiated session is a synchronization session between two user devices or more than two user devices respectively.

6. The method as claimed in any of the preceding claims, wherein the response for the change request is one of acceptance and rejection of the change request by a recipient user device if the established session is between two user devices.

7. The method as claimed in claim 6, wherein the new content is transmitted to the two user devices in the established session upon acceptance of the change request by the recipient user device.

8. The method as claimed any of the preceding claims, wherein the response for the change request is auto-accepted by each recipient user device if the established session is between more than two user devices.

9. The method as claimed in any of the preceding claims, wherein the established session comprises a session among the two or more user devices for real-time content synchronization, wherein the established session is identified by the session identifier, MIME SDP field of the session related parameters.

10. A content synchronization server for synchronizing content in real-time between two or more user devices in an established session, comprising:
a processor; and
a memory communicatively coupled to the processor, wherein the memory stores processor instructions, which, on execution, causes the processor to perform the method of any of the preceding claims.

11. A non-transitory computer readable medium including instruction stored thereon that when processed by at least one processor cause a content synchronization server to perform the method of any of claims 1 to 9.
